(19) **Europäisches Patentamt European Patent Office Office européen des brevets**

(11) **EP 2 005 113 B1**

(12) **FASCICULE DE BREVET EUROPEEN**

(45) Date de publication et mention
de la délivrance du brevet:
**23.02.2011 Bulletin 2011/08**

(21) Numéro de dépôt: **07731876.4**

(22) Date de dépôt: **05.04.2007**

(51) Int Cl.:
***G01C 19/72*** (2006.01) ***G01B 9/02*** (2006.01)

(86) Numéro de dépôt international:
**PCT/FR2007/051074**

(87) Numéro de publication internationale:
**WO 2007/116185 (18.10.2007 Gazette 2007/42)**

(54) **DISPOSITIF, PROCÉDÉ DE MESURE ET GYROMÈTRE À FIBRE OPTIQUE, ASSERVIS EN PUISSANCE**

LICHTLEITER BASIERTE VORRICHTUNG, MESSVERFAHREN UND KREISEL MIT LEISTUNGSSTEUERUNG

POWER-SERVO CONTROLLED OPTICAL FIBER BASED DEVICE, METHOD OF MEASURING AND GYROMETER

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **11.04.2006 FR 0651313**

(43) Date de publication de la demande:
**24.12.2008 Bulletin 2008/52**

(73) Titulaire: **Ixsea**
**78160 Marly le Roi (FR)**

(72) Inventeurs:
  • **URGELL, Alexandre**
    **92100 Boulogne Billancourt (FR)**
  • **WILLEMENOT, Eric**
    **92120 Palaiseau (FR)**
  • **GAIFFE, Thierry**
    **78620 L'Etang la Ville (FR)**

(74) Mandataire: **Michelet, Alain et al**
    **Cabinet Harlé et Phélip**
    **7, rue de Madrid**
    **75008 Paris (FR)**

(56) Documents cités:
**EP-A- 0 206 970 FR-A1- 2 654 827**
**US-A- 4 299 490 US-A1- 2004 233 455**

**Description**

La présente invention concerne un dispositif de mesure à fibre optique qui permet de mesurer la variation d'un paramètre produisant des perturbations non réciproques dans un interféromètre en anneau de Sagnac.

L'interféromètre de Sagnac et les phénomènes physiques qu'il met en jeu sont bien connus. Dans un tel interféromètre, une lame séparatrice ou autre dispositif séparateur divise une onde incidente. Les deux ondes contra-propagatives ainsi créées se propagent en sens opposés le long d'un chemin optique fermé, se recombinent et produisent des interférences qui dépendent de la différence de phase entre les ondes lors de leur recombinaison.

Il est connu selon le principe de réciprocité de la lumière que le chemin optique parcouru par une onde lumineuse est indépendant du sens dans lequel cette onde parcourt ce trajet, en supposant toutefois les conditions de propagation stationnaire dans le temps. Il en résulte que le déphasage mesuré, par un interféromètre de Sagnac est insensible à toute perturbation dite réciproque qui affecte pareillement les ondes contra-propagatives, c'est-à-dire qui parcourent le chemin optique dans un sens et dans l'autre. Le principe de réciprocité opère ainsi de manière analogue à une réjection de mode commun, et élimine l'effet de la plupart des changements des conditions de propagation dont la constante de temps est grande devant le temps de propagation de la lumière dans l'interféromètre.

A l'origine, le chemin optique fermé des interféromètres de Sagnac était défini par des miroirs. Il est maintenant connu qu'il peut être constitué par une bobine mutti-tour de fibre optique monomode.

Il est également connu que certains phénomènes physiques sont susceptibles de produire des perturbations, particulièrement des déphasages non-réciproques, sur les ondes contra-propagatives engendrant des différences de phase relative entre ces ondes qui modifient leur état d'interférence lors de leur recombinaison.

La mesure de la différence de phase relative permet de quantifier le phénomène qui l'a engendré.

Le principal phénomène physique susceptible de créer des perturbations non réciproques est l'effet Sagnac produit par la rotation de

l'interféromètre par rapport à un axe perpendiculaire au plan de son chemin optique fermé. L'effet Faraday ou effet magnéto-optique colinéaire est également connu comme produisant des effets non réciproques de ce type.

D'autres effets peuvent dans certaines conditions produire également une différence de phase non réciproque.

Au contraire, les variations de nombreux paramètres représentatifs de l'environnement qui sont souvent à l'origine de perturbations des mesures n'ont que des effets réciproques sur l'interféromètre de Sagnac, ne perturbent pas la différence de phase relative entre les ondes contra-propagatives et n'ont donc pas d'influence sur la mesure du paramètre étudié. Tel est le cas des variations lentes de température, d'indices, etc ... qui modifient le chemin optique parcouru par les ondes, mais le modifient de manière réciproque.

De nombreux travaux ont été menés afin d'améliorer la sensibilité et la précision des mesures pouvant être réalisées avec un tel appareil de mesure. On pourra par exemple consulter sur ce sujet le Chapitre 9 intitulé "Fiber Optic Gyroscope" de Hervé C. LEFEVRE dans l'ouvrage "Optical Fiber Sensors" Vol. 2 - ARTECH HOUSE - 1989 et l'article intitulé "Principe du gyrofibre, le gyromètre, des applications à haute dynamique, publié dans la Revue Scientifique de la Défense (1er trimestre 1990), du même auteur.

Différents modes de traitement des signaux ont été proposés. Il a tout d'abord été constaté que la réponse fournie par l'interféromètre de Sagnac est de la forme P = $P_0$ (1 + cosδφ) et donc que la sensibilité de ce signal au voisinage de la différence de phase δφ = 0 est faible.

Le document EP0206970 décrit un dispositif de mesure de rotation utilisant un interféromètre en anneau de Sagnac monté sur une plateforme soumise à des vibrations mécaniques pour moduler la différence de phase entre les deux bras de l'interféromètre. Un détecteur optique et un système électronique en boucle fermée permettent d'indiquer l'amplitude des vibrations.

Le document US4299490 décrit également un dispositif de mesure de rotation utilisant un interféromètre en anneau de Sagnac et comportant des moyens électroniques qui commandent en boucle fermée d'une part la puissance lumineuse de la source et d'autre part un oscillateur qui commande un modulateur de phase optique pour annuler le déphasage induit par une rotation.

Il a été proposé d'introduire une modulation de différence de phase $\delta\phi_b$, carrée et d'amplitude de plus ou moins π/2 par exemple, qui déplace le point de fonctionnement et produit un signal périodique dont l'amplitude est une fonction sinusoïdal du paramètre mesuré et que l'on peut donc exploiter avec une plus grande sensibilité et stabilité. Cette différence de phase est dite différence de phase de mise au biais $\delta\phi_b$.

Cette différence de phase $\delta\phi_b$ est produite par un modulateur de phase, placé à l'une des extrémités de la bobine multi-tour de l'interféromètre et commandé par un signal de commande $V_b$. Ce signal de commande $V_b$ génère sur chacune des ondes un déphasage $\phi_b$ qui produit une différence de phase entre les ondes contra-propagatives :

$$\delta\phi_b (t)= \phi_b (t)- \phi_b(t-\tau)$$

où t est le temps et $\tau$ le temps de transit, de l'une des ondes dans la bobine.

Il a ensuite été montré que la précision de la mesure est améliorée par l'utilisation d'une méthode de zéro également appelée fonctionnement en boucle fermée. Selon cette méthode, une différence de phase supplémentaire dite de contre-réaction $\delta\phi_{cr}$ est appliquée et sert à compenser la différence de phase $\delta\phi_p$ produite par le paramètre mesuré. La somme de ces deux différences de phase $\delta\phi_{cr}$ et $\delta\phi_p$, est maintenue nulle, ce qui permet de faire fonctionner l'interféromètre avec la sensibilité maximale. La mesure est réalisée par l'exploitation du signal nécessaire à la production de la différence de phase de contre-réaction $\delta\phi_{cr}$. Ainsi, la mesure est stable et linéaire.

Cette différence de phase $\delta\phi_{cr}$ est produite par le modulateur de phase commandé par un signal $V_{cr}$ qui s'ajoute à la modulation de mise au biais $V_b$ pour donner le signal total $V_m$. Ce signal $V_{cr}$ génère sur chacune des ondes un déphasage $\phi_{cr}$ qui produit une différence de phase $\delta\phi_{cr}$ entre les ondes contra-propagatives:

$$\delta\phi_{cr}(t) = \phi_{cr}(t) - \phi_{cr}(t-\tau)$$

Une implémentation de la méthode dite serrodyne consiste à appliquer un signal temporel en escalier dont les marches sont de durée T et de hauteur égale à la différence de phase $\delta\phi_{cr}$ que l'on souhaite appliquer. Pour éviter au signal $\varphi_{cr}$ d'augmenter jusqu'à plus ou moins l'infini, il est alors nécessaire de faire des sauts de phase correspondant à des multiples de $2\pi$, auxquels l'interféromètre est insensible puisque sa réponse est de la forme $P = P_0(1+\cos(\delta\phi)) = P_0(1+\cos(\delta\phi+k.2\pi))$, où k est en nombre entier quelconque, positif ou négatif. Une telle modulation serrodyne possède une forme caractéristique en dents de scie.

Par ailleurs, dans le brevet français FR-A-2654827, il a été proposé un traitement du signal dit "quatre états" assurant le fonctionnement de l'interféromètre en boucle fermée. Selon cette technique, la différence de phase de mise au biais $\delta\phi_b$ est modulée sur quatre valeurs successives $\alpha_0$, $2\pi$-$\alpha_0$, -$\alpha_0$, -$(2\pi$-$\alpha_0)$. Cette modulation particulière permet, en plus de l'asservissement à zéro du déphasage $\delta\phi_p$+S$\delta\phi_{cr}$ décrit précédemment, de suivre les variations du rapport entre le signal appliqué au modulateur et le déphasage résultant. En effet, ce rapport entre le signal appliqué au modulateur et le déphasage résultant est défini par une grandeur nommée $V_\pi$=$\pi.V_m/\phi_m$, qui fluctue avec l'environnement, par exemple avec la température. La modulation "quatre états" permet donc en même temps d'asservir à zéro le déphasage $\delta\phi_p$+$\delta\phi_{cr}$ et d'asservir le réglage du $V_\pi$, et présente différents avantages spécifiques.

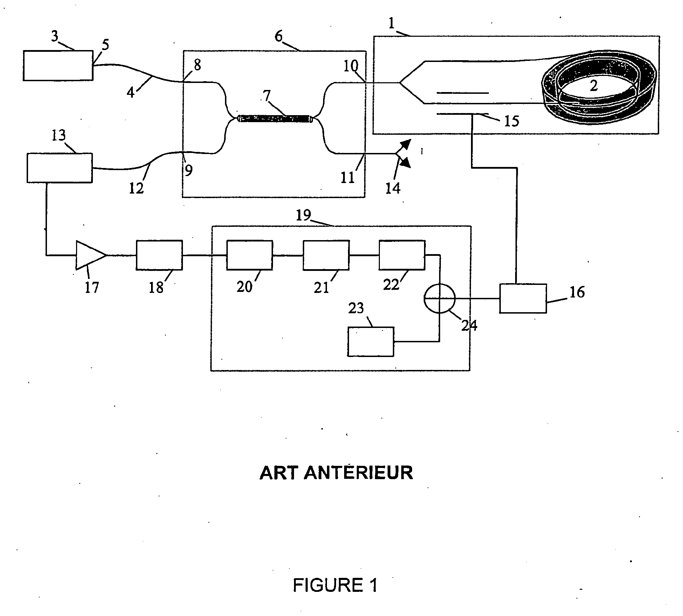

La figure 1 montre un dispositif de l'art antérieur utilisant une boucle fermée de contre-réaction et dans lequel le paramètre mesuré est la vitesse de rotation de l'interféromètre de Sagnac. Ce gyroscope à fibre optique comprend un interféromètre de Sagnac 1 qui comporte une fibre optique enroulée en une bobine multi-tour 2 autour d'un axe autour duquel la rotation dudit interféromètre 1 est mesurée. Les deux ondes électromagnétiques qui se propagent dans des directions opposées dans l'interféromètre 1 sont émises par une source de lumière 3. Cette source est une source à spectre large, par exemple une diode semi-conductrice super luminescente. Entre la source de lumière 3 et l'interféromètre 1 est placé un arrangement optique comportant une première fibre optique 4 dont une extrémité 5 est placée à un point d'émission maximale de la source de lumière 3, l'autre extrémité envoyant la lumière émise par ladite source 3 vers un coupleur 6 de faisceaux optiques. Ce coupleur 6 comprend un milieu 7 transmettant la lumière et quatre portes 8-11, disposées par paires à chacune des extrémités de ce milieu 7. Une première porte 8 reçoit la lumière émise par la première fibre optique 4 qui s'étend depuis la source de lumière 3. Sur l'autre porte 9 placée du même coté du coupleur 6 est positionnée une deuxième fibre optique 12. qui est reliée à un photodétecteur 13. A l'autre extrémité du coupleur 6, une porte 10 est reliée à l'interféromètre de Sagnac 1 par l'intermédiaire d'une troisième fibre optique. La quatrième porte 11 placée du même côté du coupleur 6, comprend une terminaison non réfléchissante 14 utilisant, par exemple, une portion de fibre optique. Le gyroscope comprend également un modulateur de phase 15 placé à l'une des extrémités de la bobine de fibre multi-tour de l'interféromètre 1. Ce modulateur de phase optique 15 reçoit des signaux de commande émis par un convertisseur numérique-analogique 16.

Les signaux optiques issus de l'interféromètre de Sagnac 1 sont envoyés par l'intermédiaire de la deuxième fibre optique 12 vers le photodétecteur 13 qui les convertit en des signaux électriques représentatifs desdits signaux optiques reçus. Un circuit en boucle fermée connecté au photodétecteur 13 d'une part et au convertisseur numérique-analogique 16 du modulateur de phase d'autre part, comprend un amplificateur 17 pour amplifier le signal électrique produit par le photodétecteur 13, un convertisseur analogique-numérique 18 numérisant le signal électrique amplifié et un moyen électronique numérique de bouclage 19. Ce moyen électronique numérique de bouclage 19 détermine la différence de phase de contre-réaction $\delta\phi_{cr}$ qui compense la différence de phase $\delta\phi_p$ introduite par la rotation de l'interféromètre de Sagnac, et ajoute la composante $\delta\phi_b$ de mise au biais.

Le moyen électronique numérique de bouclage 19 comprend un démodulateur de phase 20, suivi d'un régulateur 21 de type PID ("PID"- action Proportionnelle, Intégrale et Dérivée), et d'un intégrateur supplémentaire 22 pour compenser la différentiation que constitue le passage de $\phi_m$ à $\delta\phi_m$, durant l'opération de modulation. En outre, il comprend un modulateur de mise au biais 23, dont la sortie est ajoutée à la contre-réaction dans l'additionneur 24, pour constituer le signal total qui est envoyé vers le convertisseur numérique-analogique 16.

Le démodulateur de phase 20 prend en compte de manière synchrone à la modulation de mise au biais, le signe pris par le signal mesuré représentant le sens de la rotation. Ainsi, dans une hypothèse de modulation de mise au biais "deux états" portant, par exemple, sur deux valeurs successives $\pi/2$ et $-\pi/2$, le démodulateur de phase 20 multiplie respectivement les signaux reçus par les valeurs +1 et -1.

Le régulateur 21 comprend souvent un simple intégrateur, et dans ce cas, l'asservissement est alors d'ordre 1. Les signaux démodulés en sortie du démodulateur de phase 20 et en entrée du régulateur 21 représentent le signal d'erreur à asservir à zéro. Le signal en sortie du régulateur 21 est nommé $\delta V_{cr}$. Il constitue une mesure de $\delta\phi_{cr} = -\delta\phi_p$ et donc une valeur proportionnelle à la vitesse de rotation.

L'intégrateur 22 réalise une intégration supplémentaire pour compenser la différentiation due à la modulation réciproque qui se produit dans le modulateur de phase optique 15.

Le modulateur de mise au biais 23 génère un signal qui, une fois différentié par la modulation réciproque, effectue la mise au biais aux valeurs souhaitées. Par exemple, pour une modulation "deux états" aux valeurs successives $\delta\phi_{b1} = \pi/2$ et $\delta\phi_{b2} = -\pi/2$, le modulateur de mise au biais 23 peut générer un signal périodique de période $2\tau$ en forme de créneaux, alternant la valeur $V_{b1} = V_\pi /2$ pendant la durée $\tau$ et $V_{b2} = 0$ pendant l'autre moitié de la période.

L'additionneur 24 fait l'addition du signal de mise au biais $V_b$ et du signal de contre-réaction $V_{cr}$. La sortie de l'additionneur 24 est connectée au convertisseur numérique-analogique 16, qui commande le modulateur de phase optique 15.

Un tel dispositif de l'art antérieur à boucle fermée numérique permet d'obtenir de très bonnes performances, notamment quant à la résolution et au bruit lié à la mesure de la vitesse de rotation, ce bruit étant aussi appelé marche aléatoire angulaire ("Angular random walk" - ARW). L'ARW résulte du rapport signal sur bruit de la détection optique des signaux issus de l'interféromètre de Sagnac 1. Ainsi, la variation des pertes optiques des composants passifs et de l'efficacité des composants actifs fait varier l'ARW.

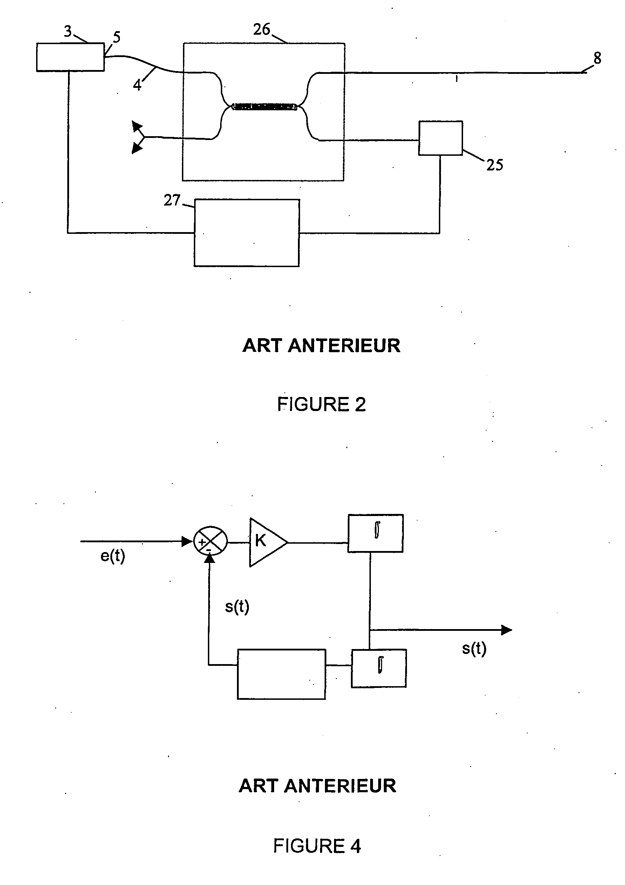

Pour stabiliser la puissance optique dudit dispositif, la solution fréquemment utilisée consiste alors en un asservissement de la puissance de la source de lumière 3 grâce à une simple mesure effectuée par un photodétecteur 25 branché après un coupleur de prélèvements 26 ("Tap coupler "). Ce coupleur de prélèvements 26 est placé entre la première fibre optique 4 s'étendant depuis la source de lumière 3 et la première porte 8 du coupleur 6. A partir de la mesure prise par le photodétecteur 25, un bloc 27 d'électronique de bouclage en puissance de la source commande la source de lumière 3. Ainsi, si par exemple la puissance mesurée par le photodétecteur 27 est inférieure à une valeur désirée, le bloc 27 augmente la commande de la source jusqu'à ce que la mesure prise par le photodétecteur 27 soit conforme à cette valeur désirée (Figure 2).

Cette solution est limitée car elle ne permet pas de compenser l'évolution des pertes des composants optiques placés après la source de lumière 3, ladite évolution résultant par exemple d'un obscurcissement desdits composants, dû aux radiations pour les gyroscopes à usage spatial ou à une dépendance en température de l'atténuation optique. Un simple déport du point de mesure de la puissance au niveau de la détection est délicat car la lumière est passée dans le modulateur de phase optique 15 et dans la bobine, et dépend donc de l'état de déphasage de l'interféromètre 1, donc de la rotation, de la contre-réaction et de la mise au biais. Le niveau mesuré va notamment dépendre des pics de puissance qui ont lieu lors des régimes transitoires entre les états de modulation et des sauts de phase de $2\pi$.

L'objectif de la présente invention est donc de proposer un dispositif de mesure à fibre optique simple dans sa conception et dans son mode opératoire, utilisant la même chaîne de détection que celle servant à la mesure de la rotation pour en extraire une information sur la puissance disponible en sortie de l'interféromètre, c'est-à-dire la puissance en détection $P_0$ en sortie de l'interféromètre lorsqu'il est à l'état de déphasage nul.

Un autre objectif est de mesurer le gain de boucle en fonctionnement, et ainsi de fournir un autotest du bon fonctionnement de la boucle principale en introduisant dans la boucle fermée une perturbation dans la bande passante de la boucle principale.

Ce dispositif de mesure permet avantageusement une compensation des variations d'atténuation de la bobine multi-tour de fibre optique exposée à des radiations.

A cet effet, l'invention concerne un dispositif de mesure à fibre optique dans lequel la variation d'un paramètre mesuré engendre une différence de phase entre deux ondes comportant :

- une source de lumière à spectre large de puissance lumineuse P,
- un interféromètre en anneau de Sagnac de préférence monomode, dans lequel se propagent deux ondes contra-propagatives, le temps de propagation des ondes entre leur séparation et leur recombinaison étant $\tau$
- un détecteur recevant un flux lumineux de l'interféromètre et le convertissant en un signal électrique représentant la différence de phase totale $\delta\phi_t$ entre les ondes contra-propagatives,
- un modulateur de phase optique générant une différence de phase $\delta\phi_m = \delta\phi_b + \delta\phi_{cr}$, comportant une composante de mise au biais $\delta\phi_b$ et une composante de contre-réaction $\delta\phi_{cr}$,
- des moyens électroniques recevant le signal électrique du détecteur et fournissant un premier signal $S_1$ fonction

du paramètre mesuré,

- le premier signal fonction du paramètre mesuré produisant un premier signal de commande $V_{cr}$ du modulateur de phase optique déterminé de telle sorte que la différence de phase $\delta\phi_{cr}$ qu'il produit entre les ondes contra-propagatives compense la différence de phase $\delta\phi_p$ introduite par le paramètre mesuré,
- les moyens électroniques comportant un démodulateur contribuant à la fourniture du premier signal fonction du paramètre mesuré,
- les moyens électroniques fournissant un deuxième signal $S_2$ fonction de la puissance lumineuse P de la source de lumière.

Selon l'invention, le modulateur de phase optique génère une composante de perturbation $\delta\phi_{cp}$ s'ajoutant à la différence de phase $\delta\phi_m = \delta\phi_b + \delta\phi_{cr}$.

Dans différents modes de réalisation particuliers du dispositif de mesure à fibre optique, chacun ayant ses avantages particuliers et susceptibles de nombreuses combinaisons techniques possibles:

- les moyens électroniques comportent un circuit de contre-réaction en boucle fermée comprenant des moyens électroniques d'asservissement de la puissance lumineuse P de la source de lumière,
- le dispositif comprend un amplificateur pour amplifier le signal électrique produit par le détecteur et un convertisseur analogique-numérique numérisant le signal électrique amplifié, cet amplificateur et ce convertisseur étant placés entre le détecteur et les moyens électroniques,
- les moyens électroniques comprennent un modulateur de mise au biais produisant un deuxième signal de commande $V_b$ du modulateur de phase optique pour générer la composante de mise au biais $\delta\phi_b$,

    • les moyens électroniques comprennent un additionneur comprenant deux entrées et une sortie, la première entrée de l'additionneur recevant le premier signal de commande $V_{cr}$ du modulateur de phase optique et son autre entrée recevant le deuxième signal de commande $V_b$ du modulateur de phase optique,
    • et le dispositif comprenant un convertisseur numérique analogique recevant le signal de sortie de l'additionneur et commandant le modulateur de phase optique,

- les moyens électroniques comprennent :

    • un régulateur placé après le démodulateur, le régulateur étant un premier intégrateur,
    • un deuxième intégrateur placé après le premier intégrateur,
    • une source de perturbation introduisant une perturbation de fréquence $f_{cp}$ générant un troisième signal de commande $V_{cp}$ du modulateur de phase optique, le troisième signal de commande $V_{cp}$ produisant une différence de phase $\delta\phi_{cp}$ entre les ondes contra-propagatives et s'ajoutant au premier signal de commande $V_{cr}$,
    • cette perturbation étant injectée par un circuit d'injection de la perturbation immédiatement avant ou après le régulateur,

- la perturbation est de moyenne nulle,
- la perturbation est apériodique,
- la fréquence $f_{cp}$ de la perturbation est supérieure à la fréquence du signal du paramètre mesuré,
- le signal de la perturbation comporte des rampes pseudo aléatoires;
- la composante de mise au biais $\delta\phi_b$ est générée par un deuxième signal de commande $V_b$ du modulateur de phase optique déterminé de telle sorte que la différence de phase $\delta\phi_b$ qu'il produit entre les ondes contra-propagatives, prenne au moins six états ($\delta\phi_1$, $\delta\phi_2$,...) définis par $\alpha_0$ et $\varepsilon_0$, avec $0 \leq \varepsilon_0 < \alpha_0 \leq \pi$ et tels que :

$$\delta\phi_1 = \alpha_0 - \varepsilon_0 \qquad \delta\phi_4 = -(\alpha_0 - \varepsilon_0)$$
$$\delta\phi_2 = \alpha_0 \qquad\qquad \delta\phi_5 = -\alpha_0$$
$$\delta\phi_3 = 2\pi - \alpha_0 \qquad \delta\phi_6 = -(2\pi - \alpha_0)$$

et les moyens électroniques produisent un deuxième signal $S_2$ fonction de la puissance P du flux lumineux mesuré par le détecteur en exploitant les six valeurs $x_1$, $x_2$, $x_3$, $x_4$, $x_5$ et $x_6$ fournies en réponse à une période du signal de commande selon la formule $(x_1 + x_4) - (x_2 + x_5)$.

L'invention concerne également un gyromètre conforme au dispositif de mesure décrit plus haut, le paramètre mesuré étant la vitesse de rotation de l'interféromètre.

L'invention concerne également un procédé de mesure d'un paramètre dont la variation engendre une différence de phase entre deux ondes, dans lequel

- on fait se propager dans un interféromètre en anneau de Sagnac de préférence monomode, deux ondes contra-propagatives émises par une source de lumière à spectre large de puissance lumineuse P, le temps de propagation des ondes entre leur séparation et leur recombinaison étant $\tau$,
- on détecte le flux lumineux issu de l'interféromètre et on le convertit en un signal électrique représentant la différence de phase totale $\delta\phi_t$ entre les ondes contra-propagatives,
- on génère une différence de phase $\delta\phi_m = \delta\phi_b + \delta\phi_{cr}$ entre les ondes contra-propagatives, la différence de phase $\delta\phi_m$ comportant une composante de mise au biais $\delta\phi_b$ et une composante de contre-réaction $\delta\phi_{cr}$,
- on envoie le signal électrique issu du détecteur vers des moyens électroniques et on détermine avec les moyens électroniques un premier signal $S_1$ fonction du paramètre mesuré,
- ce premier signal fonction du paramètre mesuré produisant un premier signal de commande $V_{cr}$ du modulateur de phase optique déterminé de telle sorte que la différence de phase $\delta\phi_{cr}$ qu'il produit entre, les ondes contra-propagatives compense la différence de phase $\delta\phi_p$ introduite par le paramètre mesuré,
- on détermine avec les moyens électroniques un deuxième signal $S_2$ fonction de la puissance lumineuse P de la source de lumière à partir du signal électrique issu du détecteur.

Selon l'invention, le modulateur de phase optique génère une composante de perturbation $\delta\phi_{cp}$ s'ajoutant à la différence de phase $\delta\phi_m = \delta\phi_b + \delta\phi_{cr}$.

L'invention sera décrite plus en détail en référence aux dessins annexés dans lesquels:

- la figure 1 est une représentation schématique d'un gyroscope à fibre optique selon un premier mode de réalisation de l'art antérieur;
- la figure 2 est une représentation schématique d'un gyroscope à fibre optique selon un deuxième mode de réalisation de l'art antérieur;
- la figure 3 est une représentation schématique d'un dispositif de mesure à fibre optique selon un mode de réalisation de l'invention;
- la figure 4 est une représentation schématique d'une boucle de Sagnac de l'art antérieur dans laquelle la différence entre le signal d'entrée e(t) et le signal de sortie s(t), c'est-à-dire l'erreur de phase ($\delta\phi_p + \delta\phi_{cr}$) est asservie à zéro;
- la figure 5 est une représentation schématique d'une boucle de Sagnac dans laquelle la différence entre le signal d'entrée e(t) et le signal de sortie s(t) est asservie à zéro, un déphasage fixe étant inséré immédiatement avant le régulateur selon un mode de réalisation de l'invention;
- la figure 6 montre le niveau de puissance détecté en sortie de l'interféromètre en fonction de son état d'interférence dans le cas d'une modulation dite "quatre états" de l'art antérieur;
- la figure 7 montre le niveau de puissance détecté en sortie de l'interféromètre en fonction de son état d'interférence dans le cas d'une modulation dite "six états" selon un mode de réalisation de l'invention;
- la figure 8 montre le niveau de puissance détecté en sortie de l'interféromètre en fonction de son état d'interférence dans le cas d'une modulation dite "huit états" selon un mode de réalisation de l'invention;

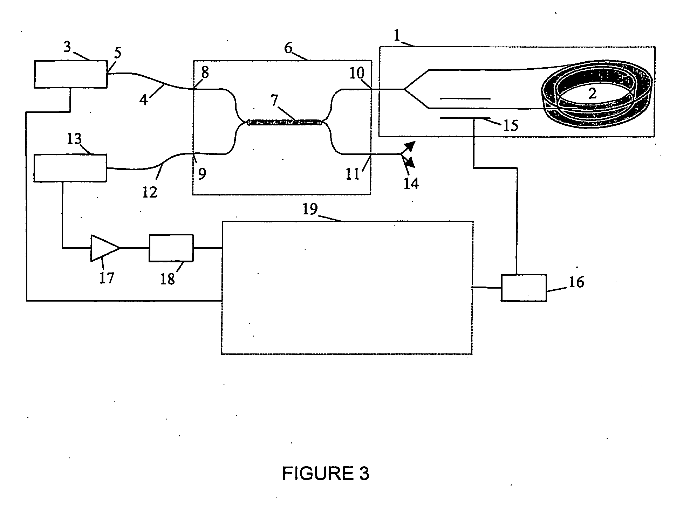

La Figure 3 montre un dispositif de mesure à fibre optique de l'invention dans lequel la variation d'un paramètre mesuré engendre une différence de phase entre deux ondes. Ce dispositif comporte une source de lumière 3 ayant un spectre large de puissance lumineuse P dont la longueur d'onde moyenne est $\lambda_m$. Il comprend également un interféromètre 1 en anneau de Sagnac, de préférence monomode, dans lequel se propagent deux ondes contrapropagatives. Le temps de propagation des ondes entre leur séparation et leur recombinaison est $\tau$. L'interféromètre de Sagnac 1 comporte une fibre optique enroulée en une bobine multi-tour 2. Entre la source de lumière 3 et l'interféromètre 1 est placé un arrangement optique dont les éléments ayant les mêmes références qu'à la figure 1 représentent les mêmes objets. Le dispositif de mesure comprend également un détecteur 13 qui reçoit un flux lumineux de l'interféromètre et le convertit en un signal électrique représentant la différence de phase totale $\delta\phi_t$ entre les ondes contra-propagatives. Le signal électrique émis par le détecteur 13 est envoyé vers des moyens électroniques 19 qui fournissent un premier signal $S_1$ fonction du paramètre mesuré. Ces moyens électroniques 19 comprennent un démodulateur de phase contribuant à la fourniture de ce premier signal $S_1$.

Le premier signal $S_1$ génère un premier signal de commande $V_{cr}$ envoyé via un convertisseur numérique - analogique 16 vers un modulateur de phase optique 15 placé à l'une des extrémités de la bobine de fibre multi-tour de l'interféromètre 1. Ce premier signal de commande $V_{cr}$ est déterminé de telle sorte que la différence de phase $\delta\phi_{cr}$, qu'il produit entre les ondes contra-propagatives compense la différence de phase $\delta\phi_p$ introduite par le paramètre mesuré. Le modulateur de phase 15 génère une différence de phase $\delta\phi_m= \delta\phi_b + \delta\phi_{cr}$, comportant la composante de contre-réaction $\delta\phi_{cr}$ et une composante de mise au biais $\delta\phi_b$.

Selon l'invention, les moyens électroniques 19 fournissent en outre un deuxième signal $S_2$ fonction de la puissance lumineuse P de la source de lumière.

Préférentiellement, ces moyens électroniques 19 sont placés sur un circuit en boucle fermée connecté au photodétecteur 13 d'une part et au convertisseur numérique - analogique 16 d'autre part. Ce circuit fermé comprend également un amplificateur 17 pour amplifier le signal électrique produit par le détecteur 13 et un convertisseur analogique-numérique 18 numérisant le signal électrique amplifié, lesquels sont placés entre le détecteur 13 et les moyens électroniques 19.

Dans un mode de réalisation de l'invention, on cherche à décaler la contre-réaction d'une constante A homogène à un déphasage pour obtenir ce deuxième signal $S_2$. Le modulateur de phase optique 15 reçoit ainsi un troisième signal de commande $V_{op}$ venant s'ajouter aux premier et deuxième signaux de commande $V_{cr}$ et $V_b$ pour générer une composante de perturbation $\delta\phi_{cp}$ s'ajoutant à la différence de phase $\delta\phi_m = \delta\phi_b + \delta\phi_{cr}$. Une source de perturbation introduisant une perturbation de fréquence $f_{cp}$ génère ce troisième signal de commande $V_{cp}$ du modulateur de phase optique. L'injection de cette perturbation par un circuit d'injection est avantageusement réalisée immédiatement avant le régulateur.

La perturbation qui est ainsi injectée correspond à des accélérations angulaires non nulles. L'asservissement à zéro que l'on cherche à réaliser sur la différence entre le signal d'entrée e(t) et le signal de sortie s(t) de la boucle de Sagnac (Figure 4), i.e. sur l'erreur de phase $(\delta\phi_p + \delta\phi_{cr})$, pour faire fonctionner l'interféromètre avec une sensibilité maximale, possède alors une erreur de traînée non nulle. Cette erreur de traînée est due au temps de réaction non nulle que met la boucle entre son entrée et sa sortie. La sortie de la boucle cause une erreur égale à l'accélération multipliée par le temps de retard. Or dans un système du premier ordre, le temps de retard est le temps caractéristique de la boucle, égal à l'inverse du coefficient de gain K. Ainsi une accélération angulaire a pour effet de créer un déphasage supplémentaire par unité de temps de $A = \dfrac{d\Omega}{dt} \times \dfrac{\pi}{\Omega_\pi}$ et une erreur de traînée angulaire de $\Omega_{erreur} = \dfrac{d\Omega}{dt} \times t_c$ donc un déphasage égal à :

$$s_2 = \Omega_{erreur} \times \frac{\pi}{\Omega_\pi} = A \times t_c = \frac{A}{K}$$

Nous avons donc simulé une erreur de traînée pour générer un biais inversement proportionnel au gain du système.

Enfin, pour dissocier la fausse erreur de traînée d'une rotation réelle, on peut par exemple, alterner des valeurs positives et négatives pour la constante A.

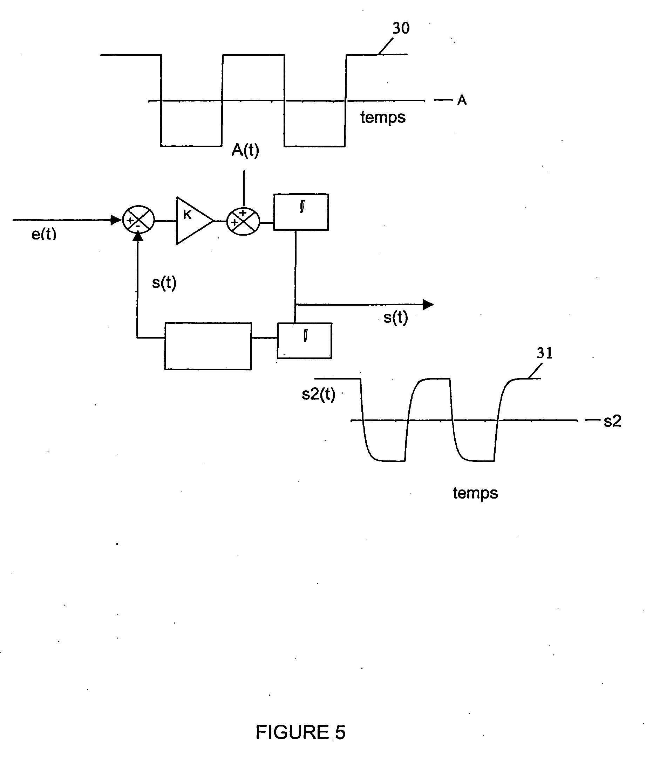

La figure 5 décrit un tel dispositif, qui permet de mesurer une grandeur inversement proportionnelle à K. Le signal carré 30 représente l'accélération angulaire fictive A(t), ajoutée en contre-réaction, en fonction du temps. Le signal 31 représente le déphasage $S_2(t)$ en fonction du temps. L'accélération angulaire fictive A(t) produit un effet sur $S_2(t)$ qui s'ajoute à la mesure.

La différence moyenne entre les niveaux hauts et bas du créneau qui s'ajoute sur la sortie est égale à 2A/K. Or les fluctuations de K sont uniquement dues aux variations des gains analogiques, et principalement aux variations de la puissance optique en détection $P_0$.

Pour ne pas confondre la réponse du dispositif de mesure à fibre optique à l'introduction d'une perturbation avec le premier signal $S_1$ fonction du paramètre mesuré, la fréquence $f_{cp}$ de la perturbation peut aussi être ajustée par exemple de sorte qu'elle soit apériodique ou supérieure à la fréquence du signal du paramètre mesuré. Toutes les formes de signaux peuvent être utilisées: rampes pseudo aléatoires, demi-paraboles, sinusoïdes, triangles ou autres.

Ce traitement peut être utilisé pour asservir la source de lumière 3. Ce traitement est également une mesure du gain en boucle fermée de la boucle Sagnac et peut être utilisé comme autotest d'un gyroscope à fibre optique. Une approche théorique a été développée pour expliquer les résultats obtenus.

En considérant que la conception de la boucle de Sagnac est conforme à la figure 4, le régulateur étant en fait un simple intégrateur avec un coefficient intégral $K_i$, la boucle Sagnac est une boucle d'asservissement du 1er ordre, ce qui signifie que le déphasage de contre-réaction noté $\delta\varphi_{cr}$ est régi par l'équation différentielle suivante :

$$\delta\varphi_{cr} = -K \times \int (\delta\varphi_p + \delta\varphi_{cr}) dt$$

où

■ t est le temps,
■ $\delta\varphi_p$ est le déphasage dû à la rotation par effet Sagnac et fait office de fonction d'entrée du système : $e(t) = \delta\varphi_p$,
■ K est le coefficient de gain intégral de ce système du 1er ordre,
■ $\delta\varphi_{cr}$ est le déphasage de contre-réaction qui compense $\delta\varphi_p$ et fait office au signe près de fonction de sortie du système $s(t) = -\delta\varphi_{cr}$

On peut également établir que ce système est du 1er ordre par la présence dans la contre-réaction de la boucle Sagnac de deux intégrateurs (le régulateur et l'intégrateur) et d'un dérivateur (le modulateur optique 15).

Le schéma de la boucle Sagnac est rappelé à la figure 4. Dans cette boucle l'erreur de phase $(\delta\varphi_p+\delta\varphi_{cr})=e(t)-s(t)$ est asservie à zéro.

Dans ce mode de réalisation de l'invention, on cherche à décaler la contre-réaction d'une constante A homogène à un déphasage. Cette constante est ajoutée numériquement et, en supposant que la valeur du $V_\pi$ est bien asservie, la constante A correspond à un déphasage fixe à l'interféromètre, indépendant notamment de la puissance optique $P_0$ et de toutes les contributions analogiques du gain susceptibles de varier.

On a alors

$$\delta\varphi_{cr} = -\left(K \times \int(\delta\varphi_p + \delta\varphi_{cr})dt + \int Adt\right)$$

$$s(t) = \int[K(e(t) - s(t)) + A]dt$$

$$\frac{ds}{dt}(t) = K(e(t) - s(t)) + A$$

En notant S(p) et E(p) les transformées de Laplace respectives des signaux s(t) et e(t), on a

$$pS(p) = K \times (E(p) - S(p)) + \frac{A}{p}$$

$$S(p) \times (p + K) = K \times E(p) + \frac{A}{p}$$

$$S(p) = \frac{K}{p+K}E(p) + \frac{A}{p(p+K)}$$

$$S(p) = \frac{1}{1+\frac{p}{K}}E(p) + \frac{A}{K} \times \frac{K}{p \times (p+K)}$$

Par transformée de Laplace inverse, on en déduit que le signal de sortie

$$s(t) = s_1(t) + s_2(t)$$

■ $s_1(t)$ est la transformée de Laplace inverse $\overline{1+p/K}\; E(p)$, et correspond à la réponse normale d'un système du premier ordre conforme à la figure 4.

■ $S_2(t)$ est la transformée de Laplace inverse $\dfrac{A}{K} \times \dfrac{K}{p(p+K)}$, et correspond à l'effet de l'introduction du décalage A.

D'après les tables de transformées de Laplace inverse on a :

$$s_2(t) = \frac{A}{K} \times \left(1 - e^{-Kt}\right)$$

$$s_2(t) = \frac{A}{K} \quad pour\; t \gg t_c = \frac{1}{K}$$

On en déduit que le décalage de l'asservissement par la constante A a pour effet, après une montée exponentielle de temps caractéristique égal à celui de la boude, de créer un biais sur la sortie d'une valeur inversement proportionnelle au coefficient de gain du premier ordre de la boucle Sagnac.

Dans un autre mode de réalisation de l'invention, on cherche à créer de nouveaux états de modulation qui permettent de mesurer, après une démodulation spécifique, le niveau de puissance reçu sur le détecteur principal.

Rappelons d'abord que la modulation "quatre états" présentée dans le brevet français FR-A-2654827 consiste en une modulation de mise au biais à quatre valeurs de déphasage :

$$\delta\phi_{b1} = \alpha_0$$

$$\delta\phi_{b2} = 2\pi - \alpha_0$$

$$\delta\phi_{b3} = -\alpha_0$$

$$\delta\phi_{b4} = -(2\pi - \alpha_0)$$

où $\alpha_0$ est un déphasage constant. Le déphasage de mise au biais s'ajoute à la différence de phase $\delta\phi_p$ produite par le paramètre mesuré et au déphasage de contre-réaction $\delta\phi_{cr}$. Les puissances mesurées sur le détecteur 13 recevant le flux lumineux de l'interféromètre, ont donc respectivement pour les états i = 1 à 4:

$$P_I = P_0 \times \left(\frac{1 + \cos(\delta\phi_{bI} + \delta\phi_p + \delta\phi_{cr})}{2}\right) = P_0 \times \cos^2\left(\frac{\delta\phi_{bI} + \delta\phi_p + \delta\phi_{cr}}{2}\right)$$

Lors du fonctionnement d'un dispositif de mesure à fibre optique, le signal $(\delta\varphi_p + \delta\varphi_{cr})$ est asservi à 0, ce qui permet de faire fonctionner l'interféromètre avec une sensibilité maximale. Le signal $(\delta\varphi_p + \delta\varphi_{cr})$ est donc très petit devant 1 et l'approximation linéaire de la fonction $\cos^2$ autour de la valeur $\cos^2(\delta\phi_{bI}/2)$ peut être effectuée. Ainsi,

$$P_I \approx P_0 \times \cos^2\left(\frac{\delta\phi_{bI}}{2}\right) - P_0 \times (\delta\phi_p + \delta\phi_{cr}) \times 2\sin\left(\frac{\delta\phi_{bI}}{2}\right) \times \cos\left(\frac{\delta\phi_{bI}}{2}\right) \times \frac{1}{2}$$

$$P_l \approx P_0 \times \cos^2\left(\frac{\delta\phi_{bl}}{2}\right) - \frac{P_0}{2} \times (\delta\phi_p + \delta\phi_{cr}) \times \sin(\delta\phi_{bl})$$

Le plus souvent la détection synchrone est suivie d'un filtre passe-haut qui supprime la composante continue avant échantillonnage par le convertisseur analogique-numérique 18.

Il est intéressant de noter que d'après les lois trigonométriques, on a

$$\cos^2(\alpha_0/2) = \cos^2((2\pi-\alpha_0)/2) = \cos^2(-\alpha_0/2) = \cos^2(-(2\pi-\alpha_0)/2),$$

on en déduit que lorsque le dispositif de mesure à fibre optique, et donc la boucle Sagnac, est asservi, la composante continue vaut :

$$\langle P_l \rangle = P_0 \times \cos^2\left(\frac{\alpha_0}{2}\right)$$

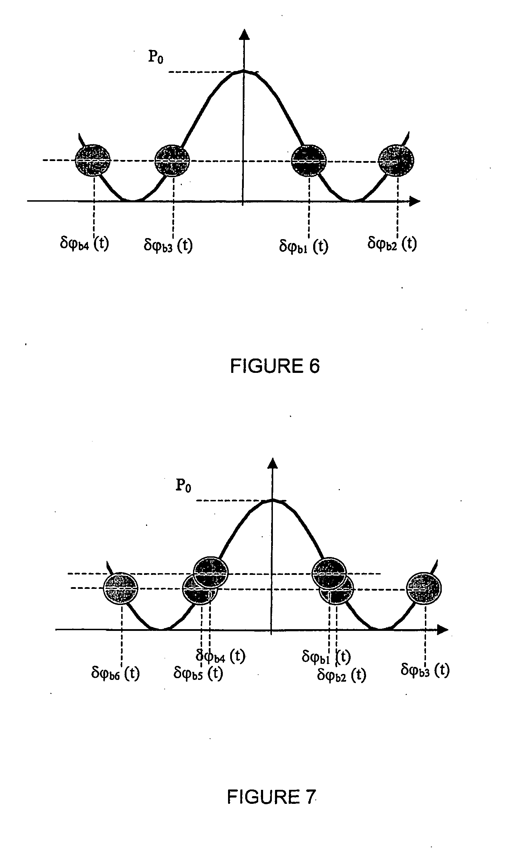

Les quatre états de modulation ont un niveau de puissance identique, comme le montre la figure 6, qui représente le niveau de puissance détecté en sortie de l'interféromètre en fonction de son état d'interférence.

Sur la figure 6, l'axe des ordonnées représente le signal mesuré par le détecteur 13 et l'axe des abscisses représente la valeur de déphasage.

Le signal d'erreur utilisé dans la boucle Sagnac est calculé suivant

$$\varepsilon_{sagnac} = P_1 - P_2 - P_3 + P_4$$

Le signal d'erreur utilisé dans la boucle asservissant la grandeur $V_\pi = \pi \times V_m/\phi_m$ est calculé suivant

$$\varepsilon_{V_\pi} = P_1 - P_2 + P_3 - P_4$$

Selon ce mode de réalisation de l'invention, on ajoute de nouveaux états de modulation ayant une puissance moyenne légèrement différente de $P_0 \times \cos^2(\alpha_0/2)$.

On peut ainsi réaliser par exemple une modulation à 6 états tels que

$$\delta\varphi_{b1} = \alpha_0 - \varepsilon_0$$

$$\delta\varphi_{b2} = \alpha_0$$

$$\delta\varphi_{b3} = 2\pi - \alpha_0$$

$$\delta\varphi_{b4} = -(\alpha_0 - \varepsilon_0)$$

$$\delta\varphi_{b5} = -\alpha_0$$

$$\delta\varphi_{b6} = -(2\pi - \alpha_0)$$

où $\varepsilon_0$ est suffisamment faible pour que l'on reste dans la plage de mesure du convertisseur analogique-numérique 18. Les niveaux moyens de puissance des différents états sont désormais légèrement différents comme le montre la figure 7, et leur différence est proportionnelle à la puissance $P_0$.

Avec ce schéma de modulation, le signal d'erreur utilisé dans la boucle Sagnac est calculé suivant :

$$\varepsilon_{sagnac} = P_2 - P_3 - P_5 + P_6$$

Le signal d'erreur utilisé dans la boucle asservissant la grandeur $V_\pi = \pi . V_m / \phi_m$ est calculé suivant :

$$\varepsilon_{V_\pi} = P_2 - P_3 + P_5 - P_6$$

Le signal servant à mesurer $P_0$ se calcule suivant :

$$mesure_{P0} = P_1 - P_2 + P_4 - P_5$$

$$\langle mesure_{P0} \rangle = P_0 . \cos^2(\frac{\alpha_0 - \varepsilon_0}{2}) - P_0 . \cos^2(\frac{\alpha_0}{2}) + P_0 . \cos^2(-\frac{\alpha_0 - \varepsilon_0}{2}) - P_0 . \cos^2(-\frac{\alpha_0}{2})$$

$$\langle mesure_{P0} \rangle \approx P_0 . \varepsilon_0 . \sin(\alpha_0)$$

On peut éventuellement asservir $P_0$ à une constante en se servant du signal d'erreur suivant :

$$\varepsilon_{P0} = Commande - (P_1 - P_2 + P_4 - P_5)$$

Il suffit alors de se servir de ce signal d'erreur pour régler la puissance de la source de lumière. On peut ainsi reboucler sur la source comme l'illustre la figure 5 et la figure 3 où le bloc 19 d'électronique numérique de bouclage est supposé enrichi du traitement numérique proposé et possède donc comme sortie supplémentaire vers la source 3 un signal de commande en puissance.

On peut également réaliser une modulation à 8 états tels que

$$\delta\varphi_{b1} = \alpha_0$$

$$\delta\varphi_{b2} = 2\pi - \alpha_0$$

$$\delta\varphi_{b3} = -\alpha_0$$

$$\delta\varphi_{b4} = -(2\pi - \alpha_0)$$

$$\delta\varphi_{b5} = \alpha_0 - \varepsilon_0$$

$$\delta\varphi_{b6} = 2\pi - \alpha_0 + \varepsilon_0$$

$$\delta\varphi_{b7} = -\alpha_0 + \varepsilon_0$$

$$\delta\varphi_{b8} = -(2\pi - \alpha_0) - \varepsilon_0$$

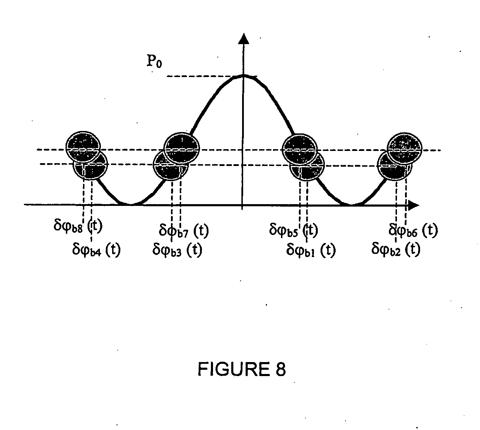

où $\varepsilon_0$ est suffisamment faible pour que l'on reste dans la plage de mesure du convertisseur analogique-numérique 18. Les niveaux moyens de puissance des différents états sont également légèrement différents comme le montre la figure 8, et leur différence est proportionnelle à $P_0$.

Avec ce schéma de modulation, le signal d'erreur utilisé dans la boucle Sagnac est calculé suivant :

$$\varepsilon_{sagnac} = P_1 - P_2 + P_4 - P_3 + P_5 - P_6 + P_8 - P_7$$

Le signal d'erreur utilisé dans la boucle asservissant la grandeur $V_\pi = \pi.V_m/\phi_m$ est calculé suivant :

$$\varepsilon_{V\pi} = P_1 - P_2 + P_3 - P_4 + P_5 - P_6 + P_7 - P_8$$

Des modulations avec un nombre d'états supérieur à 8 sont également possibles.

**Revendications**

1. Dispositif de mesure à fibre optique dans lequel la variation d'un paramètre mesuré engendre une différence de phase entre deux ondes comportant

   - une source de lumière (3) à spectre large de puissance lumineuse P,
   - un interféromètre (1) en anneau de Sagnac de préférence monomode, dans lequel se propagent deux ondes contrapropagatives, le temps de propagation des ondes entre leur séparation et leur recombinaison étant
   - un détecteur (13) recevant un flux lumineux de l'interféromètre (1) et le convertissant en un signal électrique représentant la différence de phase totale $\delta\phi_t$ entre les ondes contra-propagatives,
   - un modulateur de phase optique (15) générant une différence de phase $\delta\phi_m = \delta\phi_b + \delta\phi_{cr}$, comportant une composante de mise au biais $\delta\phi_b$ et une composante de contre-réaction $\delta\phi_{cr}$,
   - des moyens électroniques (19) recevant le signal électrique du détecteur (13) et fournissant un premier signal $S_1$ fonction du paramètre mesuré,
   - ledit premier signal fonction du paramètre mesuré produisant un premier signal de commande $V_{cr}$ du modulateur de phase optique (15) déterminé de telle sorte que la différence de phase $\delta\phi_{cr}$ qu'il produit entre les ondes contra-propagatives compense la différence de phase $\delta\phi_p$ introduite par le paramètre mesuré,
   - lesdits moyens électroniques (19) comportant un démodulateur contribuant à la fourniture du premier signal fonction du paramètre mesuré,
   - lesdits moyens électroniques (19) fournissant un deuxième signal $S_2$ fonction de la puissance lumineuse P de la source de lumière (3),

   **caractérisé en ce que** le modulateur de phase optique (15) génère une composante de perturbation $\delta\phi_{cp}$ s'ajoutant à la différence de phase $\delta\phi_m = \delta\phi_b + \delta\phi_{cr}$.

2. Dispositif de mesure à fibre optique selon la revendication 1, **caractérisé en ce que** les moyens électroniques (19) comportent un circuit de contre-réaction en boucle fermée comprenant des moyens électroniques d'asservissement de la puissance lumineuse P de la source de lumière (3).

3. Dispositif de mesure à fibre optique selon la revendication 1 ou 2, **caractérisé en ce qu'**il comprend un amplificateur (17) pour amplifier le signal électrique produit par le détecteur (13) et un convertisseur analogique-numérique (18) numérisant le signal électrique amplifié, lesdits amplificateur (17) et convertisseur (18) étant placés entre ledit détecteur (13) et lesdits moyens électroniques (19).

4. Dispositif de mesure à fibre optique selon l'une quelconque des revendications 1 à 3, **caractérisé en ce que** les moyens électroniques (19) comprennent un modulateur de mise au biais produisant un deuxième signal de commande $V_b$ du modulateur de phase optique (15) pour générer ladite composante de mise au biais $\delta\phi_b$.

5. Dispositif de mesure à fibre optique selon la revendication 4, **caractérisé en ce que** :

   - les moyens électroniques (19) comprennent un additionneur (24) comprenant deux entrées et une sortie,

- la première entrée de l'additionneur recevant ledit premier signal de commande $V_{cr}$ du modulateur de phase optique (15) et son autre entrée recevant ledit deuxième signal de commande $V_b$ du modulateur de phase optique (15),

- et ledit dispositif comprenant un convertisseur numérique - analogique (16) recevant le signal de sortie de l'additionneur et commandant le modulateur de phase optique (15).

6. Dispositif de mesure à fibre optique selon l'une quelconque des revendications 1 à 5, **caractérisé en ce que** les moyens électroniques (19) comprennent :

- un régulateur placé après ledit démodulateur, ledit régulateur étant un premier intégrateur,
- un deuxième intégrateur placé après ledit premier intégrateur,
- une source de perturbation introduisant une perturbation de fréquence $f_{cp}$ générant un troisième signal de commande $V_{cp}$ du modulateur de phase optique (15), ledit troisième signal de commande $V_{cp}$ produisant une différence de phase $\delta\phi_{cp}$ entre les ondes contra-propagatives et s'ajoutant au premier signal de commande $V_{cr}$.
- ladite perturbation étant injectée par un circuit d'injection de la perturbation immédiatement avant ou après le régulateur.

7. Dispositif de mesure à fibre optique selon la revendication 6, **caractérisé en ce que** la perturbation est de moyenne nulle.

8. Dispositif de mesure à fibre optique selon la revendication 6 ou 7, **caractérisé en ce que** la perturbation est apériodique.

9. Dispositif de mesure à fibre optique selon la revendication 6 ou 7, **caractérisé en ce que** la fréquence $f_{cp}$ de la perturbation est supérieure à la fréquence du signal du paramètre mesuré.

10. Dispositif de mesure à fibre optique selon l'une quelconque des revendications 6 à 9, **caractérisé en ce que** le signal de la perturbation comporte des rampes pseudo aléatoires.

11. Dispositif de mesure à fibre optique selon l'une quelconque des revendications 1 à 5, **caractérisé en ce que** la composante de mise au biais $\delta\phi_b$ est générée par un deuxième signal de commande $V_b$ du modulateur de phase optique (15) déterminé de telle sorte que la différence de phase $\delta\phi_b$ qu'il produit entre les ondes contra-propagatives, prenne au moins six états ($\delta\phi_1, \delta\phi_2, ...$) définis par $\alpha_0$ et $\varepsilon_0$, avec $0 \le \varepsilon_0 < \alpha_0 \le \pi$ et tels que :

$$\delta\phi_1 = \alpha_0 - \varepsilon_0 \qquad \delta\phi_4 = -(\alpha_0 - \varepsilon_0)$$

$$\delta\phi_2 = \alpha_0 \qquad \delta\phi_5 = -\alpha_0$$

$$\delta\phi_3 = 2\pi - \alpha_0 \qquad \delta\phi_6 = -(2\pi - \alpha_0)$$

et **en ce que** les moyens électroniques (19) produisent un deuxième signal $S_2$ fonction de la puissance P du flux lumineux mesuré par le détecteur (13) en exploitant les six valeurs $x_1$, $x_2$, $x_3$, $x_4$, $x_5$ et $x_6$ fournies en réponse à une période du signal de commande selon la formule $(x_1 + x_4) - (x_2 + x_5)$.

12. Gyromètre **caractérisé en ce qu'**il est conforme au dispositif de mesure de l'une quelconque des revendications 1 à 11, le paramètre mesuré étant la vitesse de rotation de l'interféromètre (1).

13. Procédé de mesure d'un paramètre dont la variation engendre une différence de phase entre deux ondes, dans lequel

- on fait se propager dans un interféromètre (1) en anneau de Sagnac de préférence monomode, deux ondes contrapropagatives émises par une source de lumière (3) à spectre large de puissance lumineuse P, le temps de propagation des ondes entre leur séparation et leur recombinaison étant $\tau$,

- on détecte le flux lumineux issu de l'interféromètre (1) et on le convertit en un signal électrique représentant la différence de phase totale $\delta\phi_t$ entre les ondes contra-propagatives,
- on génère une différence de phase $\delta\phi_m = \delta\phi_b + \delta\phi_{cr}$ entre les ondes contra-propagatives, ladite différence de phase $\delta\phi_m$ comportant une composante de mise au biais $\delta\phi_b$ et une composante de contre-réaction $\delta\phi_{cr}$,
- on envoie le signal électrique issu du détecteur (13) vers des moyens électroniques (19) et on détermine avec lesdits moyens électroniques (19) un premier signal $S_1$ fonction du paramètre mesuré,
- ledit premier signal fonction du paramètre mesuré produisant un premier signal de commande $V_{cr}$ du modulateur de phase optique (15) déterminé de telle sorte que la différence de phase $\delta\phi_{cr}$ qu'il produit entre les ondes contra-propagatives compense la différence de phase $\delta\phi_p$ introduite par le paramètre mesuré,
- on détermine avec lesdits moyens électroniques (19) un deuxième signal $S_2$ fonction de la puissance lumineuse P de la source de lumière (3) à partir du signal électrique issu du détecteur (13),

**caractérisé en ce que** le modulateur de phase optique (15) génère une composante de perturbation $\delta\phi_{cp}$ s'ajoutant à la différence de phase $\delta\phi_m = \delta\phi_b + \delta\phi_{cr}$.

## Claims

1. Optical-fiber measuring device in which the variation of a measured parameter generates a phase difference between two waves, including:

   - a wide-spectrum light source with a light power P,
   - a Sagnac ring interferometer, preferably single-mode, in which propagate two counter-propagating waves, the wave propagation time between the separation and recombination thereof being $\tau$,
   - a detector receiving a light flux from the interferometer and converting it into an electrical signal representing the total phase difference $\delta\phi_t$ between the counter-propagating waves,
   - an optical phase modulator generating a phase difference $\delta\phi_m = \delta\phi_b + \delta\phi_{cr}$, including a biasing component $\delta\phi_b$ and a feedback component $\delta\phi_{cr}$,
   - electronic means receiving the electrical signal from the detector and providing a first signal $S_1$ function of the measured parameter,
   - said first signal function of the measured parameter producing an optical phase modulator first control signal $V_{cr}$, determined so that the phase difference $\delta\phi_{cr}$ produced thereby between the counter-propagating waves offsets the phase difference $\delta\phi_p$ introduced by the measured parameter,
   - said electronic means including a demodulator contributing to provide the first signal function of the measured parameter,
   - said electronic means providing a second signal $S_2$ function of the light power P of the light source,

   **characterized in that** the optical phase modulator generates a disturbance component $\delta\phi_{cp}$ adding to the phase difference $\delta\phi_m = \delta\phi_b + \delta\phi_{cr}$.

2. The optical-fiber measuring device according to claim 1, **characterized in that** the electronic means include a closed-loop feedback circuit comprising electronic means for servo-controlling the light power P of the light source.

3. The optical-fiber measuring device according to claim 1 or 2, **characterized in that** it comprises an amplifier to amplify the electrical signal produced by the detector and an analog-digital converter digitizing the amplified electrical signal, said amplifier and converter being placed between said detector and said electronic means.

4. The optical-fiber measuring device according to any one of claims 1 to 3, **characterized in that** the electronic means comprise a biasing modulator producing an optical phase modulator second control signal $V_b$ to generate said biasing component $\delta\phi_b$.

5. The optical-fiber measuring device according to claim 4, **characterized in that**:

   - the electronic means comprise an adder comprising two inputs and one output,
   - the first input of the adder receiving said optical phase modulator first control signal $V_{cr}$ and the other input thereof receiving said optical phase modulator second control signal $V_b$,
   - and said device comprising a digital-analog converter receiving the output signal of the adder and controlling the optical phase modulator.

**6.** The optical-fiber measuring device according to any one of claims 1 to 5, **characterized in that** the electronic means comprise:

- a regulator placed after said demodulator, the regulator being a first integrator,
- a second integrator placed after said first integrator,
- a disturbance source introducing a frequency disturbance $f_{cp}$ generating an optical phase modulator third control signal $V_{cp}$, said third control signal $V_{cp}$ producing a phase difference $\delta\phi_p$ between the counter-propagating waves and adding to the first control signal $V_{cr}$,
- said disturbance being injected through a disturbance injection circuit immediately before or after the regulator.

**7.** The optical-fiber measuring device according to claim 6, **characterized in that** the disturbance has a zero-mean value.

**8.** The optical-fiber measuring device according to claim 6 or 7, **characterized in that** the disturbance is aperiodic.

**9.** The optical-fiber measuring device according to claim 6 or 7, **characterized in that** the frequency $f_{cp}$ of the disturbance is greater than the frequency of the measured parameter signal.

**10.** The optical-fiber measuring device according to any one of claims 6 to 9, **characterized in that** the disturbance signal includes pseudo-random ramps,

**11.** The optical-fiber measuring device according to any one of claims 1 to 5, **characterized in that** the biasing component $\delta\phi_b$ is generated by an optical phase modulator second control signal $V_b$, determined so that the phase difference $\delta\phi_b$ produced thereby between the counter-propagating waves takes at least six states ($\delta\phi_1$, $\delta\phi_2$,...) defined by $\alpha_0$ and $\varepsilon_0$, with $0 \leq \varepsilon_0 < \alpha_0 \leq \pi$ and such that:

$$\delta\phi_1 = \alpha_0 - \varepsilon_0 \qquad \delta\phi_4 = -(\alpha_0 - \varepsilon_0)$$

$$\delta\phi_2 = \alpha_0 \qquad \delta\phi_5 = -\alpha_0$$

$$\delta\phi_3 = 2\pi - \alpha_0 \qquad \delta\phi_6 = -(2\pi - \alpha_0)$$

and **in that** the electronic means produce a second signal $S_2$ function of the power P of the light flux measured by the detector using the six values $x_1$, $x_2$, $x_3$, $x_4$, $x_5$ and $x_6$ provided in response to a period of the control signal according to the formula $(x_1 + x_4)-(x_2+x_5)$.

**12.** Gyrometer **characterized in that** it complies with the measuring device according to any one of claims 1 to 11, the measured parameter being the rotation speed of the interferometer.

**13.** Method for measuring a parameter whose variation generates a phase difference between two waves, in which:

- two counter-propagating waves emitted by a wide-spectrum light source with a light power P are propagated in a preferably single-mode Sagnac ring interferometer, the wave propagation time between the separation and recombination thereof being $\tau$,
- the light flux outputted from the interferometer is detected and converted into an electrical signal representing the total phase difference $\delta\phi_t$ between the counter-propagating waves,
- a phase difference $\delta\phi_m = \delta\phi_b + \delta\phi_{cr}$ between the counter-propagating waves is generated, said phase difference $\delta\phi_m$ including a biasing component $\delta\phi_b$ and a feedback component $\delta\phi_{cr}$,
- an electrical signal outputted from the detector is sent to electronic means and said electronic means determine a first signal $S_1$ function of the measured parameter,
- said first signal function of the measured parameter producing an optical phase modulator first control signal $V_{cr}$, determined so that the phase difference $\delta\phi_{cr}$ produced thereby between the counter-propagating waves offsets the phase difference $\delta\phi_p$ introduced by the measured parameter,
- said electronic means determine a second signal $S_2$ function of the light power P of the light source from the electrical signal outputted from the detector,

**characterized in that** the optical phase modulator generates a disturbance component $\delta\phi_{cp}$ adding to the phase difference $\delta\phi_m = \delta\phi_b + \delta\phi_{cr}$.

**Patentansprüche**

1. Lichtleiterbasierte Messvorrichtung, bei der die Änderung einer Messgröße einen Phasenunterschied zwischen zwei Wellen erzeugt, aufweisend

   - eine Lichtquelle (3) mit breitem Spektrum und der Leuchtkraft P,
   - ein Sagnac-Ringinterferometer (1), vorzugsweise Monomode, in dem sich zwei gegenläufige Wellen ausbreiten, wobei die Laufzeit der Wellen zwischen ihrer Aufteilung und ihrer Zusammenführung $\tau$ beträgt,
   - einen Detektor (13), der eben Lichtstrom vom Interferometer (1) empfängt und ihn in ein elektrisches Signal umwandelt, das den Gesamtphasenunterschied $\delta\varphi_t$ zwischen den gegenläufigen Wellen darstellt,
   - einen optischen Phosenmodulator (15), der einen Phasenunterschied $\delta\varphi_m = \delta\varphi_b + \delta\varphi_{cr}$ erzeugt, der eine Abweichkomponente $\delta\varphi_m$ und eine Gegenkopplungskomponente $\delta\varphi_{cr}$ aufweist,
   - elektronische Mittel (19), die das elektrische Signal vom Detektor (13) empfangen und ein erstes Signal $S_1$ in Abhängigkeit von der Messgröße bereitstellen,
   - wobei das erste Signal in Abhängigkeit von der Messgröße ein erstes Stetiei-signal $V_{cr}$ des optischen Phasenmodulators (15) erzeugt, das derart ermittelt wird, dass der Phasenunterschied $\delta\varphi_{cr}$, den er zwischen den gegenläufigen Wellen erzeugt, den Phasenunterschied $\delta\varphi_p$ kompensiert, der durch die Messgröße bewirkt wurde,
   - wobei die elektronischen Mittel (19) einen Demodulator aufweisen, der dazu beiträgt, das erste Signal in Abhängigkeit von der Messgröße bereitzustellen,
   - wobei die elektronischen Mittel (19) ein zweites Signal $S_2$ in Abhängigkeit von der Leuchtkraft P der Lichtquelle (3) bereitstellen,

   **dadurch gekennzeichnet, dass** der optische Phasenmodulator (15) eine Störkomponente $\delta\varphi_{cp}$ erzeugt, die zum Phasenunterschied $\delta\varphi_m = \delta\varphi_b + \delta\varphi_{cr}$ hinzukommt.

2. Lichtleiterbasierte Messvorrichtung nach Anspruch 1, **dadurch gekennzeichnet, dass** die elektronischen Mittel (19) ein rückgekoppelte Regelsystem aufweisen, das elektronische Mittel zur Regelung der Leuchtkraft P der Lichtquelle (3) umfasst.

3. Lichtielterbasierte Messvorrichtung noch Anspruch 1 oder 2, **dadurch gekennzeichnet, dass** sie einen Verstärker (17) zur Verstärkung des elektrischen Signals umfasst, das vom Detektor (13) erzeugt wurde, und einen Analog-Digital-Wandler (18), der das verstärkte elektrische Signal digitalisiert, wobei der Verstärker (17) und der Wandler (18) zwisehen dem Detektor (13) und den elektronischen Mitteln (19) platziert sind.

4. Lichtleiterbasierte Messvorrichtung nach einem der Ansprüche 1 bis 3, **dadurch gekennzeichnet, dass** die elektronischen Mittel (19) einen Abweichmodulator umfassen, der ein zweites Steuersignal $V_b$ des optischen Phasenmodulators (15) erzeugt, um die Abweichkomponente $\delta\varphi_b$ zu erzeugen.

5. Lichtleiterbasierte Messvorrichtung nach Anspruch 4, **dadurch gekennzeichnet, dass**:

   - die elektronischen Mittel (19) einen Addierer (24) umfassein, der zwei Eingänge und einen Ausgang umfasst,
   - wobei der erste Eingang des Addierers das erste Steuersignal $V_{cr}$ des optischen Phasenmodulators (15) empfängt und der andere Eingang das zweite Steuersignal $V_b$ des optischen Phasenmodulators (15) empfängt,
   - und wobei die Vorrichtung einen Analog-Digital-Wandler (16) umfasst, der das Ausgangssignal des Addierers empfängt und den optischen Phasenmodulator (15) steuert.

6. Lichtleiterbasierte Messvorrichtung nach einem der Ansprüche 1 bis 5, **dadurch gekennzeichnet, dass** die elektronischen Mittel (19) Folgendes umfassen:

- einen Regler, der hinter dem Demodulator angeordnet ist, wobei der Regler ein erster Integrator ist,
- einen zweiten Integrator, der hinter dem ersten Integrator angeordnet ist,
- eine störquelle, die eine Störung mit der Frequenz $f_{cp}$ erzeugt und ein drittes Steuersignal $V_{cp}$ des optischen Phasenmodulators (15) erzeugt, wobei das dritte Steuersignal $V_{cp}$ einen Phosenunterschied $\delta\varphi_{cp}$ zwischen den gegenläufigen Wellen erzeugt und zum ersten Steuersignal $V_{cr}$ hinzukommt,
- wobei die Störung über ein System zum Einkoppeln der Störung unmittelbar vor oder nach dem Regler eingekoppelt wird.

7. Lichtleiterbasierte Messvorrichtung nach Anspruch 6, **dadurch gekennzeichnet, dass** der Mittelwert der Störung null ist.

8. Lichtleiterbasierte Messvorrichtung nach Anspruch 6 oder 7, **dadurch gekennzeichnet, dass** die Störung nicht periodisch ist.

9. Lichtleiterbasierte Messvorrichtung nach Anspruch 6 oder 7, **dadurch gekennzeichnet, dass** die Frequenz $f_{cp}$ der Störung höher ist als die Frequenz des Signals der Messgröße ist.

10. Lichtleiterbasierte Messvorrichtung nach einem der Ansprüche 6 bis 9, **dadurch gekennzeichnet, dass** das Störsignal pseudozufällige Anstieg aufweist.

11. Lichtleiterbasierte Messvorrichtung nach einem der Ansprüche 1 bis 5, **dadurch gekennzeichnet, dass** die Abweichkomponente $\delta\varphi_b$ von einem zweiten Steuersignal $V_b$ des optischen Phosenmodulators (15) erzeugt wird, dass derart ermittelt wird, dass der Phasenunterschied $\delta\varphi_b$, den er zwischen den gegenläufigen Wellen erzeugt, mindestens sechs Zustände ($\delta\varphi_1, \delta\varphi_2,...$) annimmt, die durch $a_0$ und $\varepsilon_0$ mit $0 \le \varepsilon_0 \le a_0 \le \pi$ definiert sind, und derart dass:

$$\delta\varphi_1 = a_0 - \varepsilon_0 \qquad \delta\varphi_4 = -(a_0 - \varepsilon_0)$$

$$\delta\varphi_2 = a_0 \qquad \delta\varphi_5 = -a_0$$

$$\delta\varphi_3 = 2\pi - a_0 \qquad \delta\varphi_6 = -(2\pi - a_0)$$

und **dadurch**, dass die elektronischen Mittel (19) ein zweites Signal $S_2$ in Abhängigkeit von der Kraft P des Lichtstroms erzeugen, der vom Detektor (13) gemessen wird, wobei die sechs Werte $x_1$, $x_2$, $x_3$, $x_4$, $x_5$ und $x_6$ verwendet werden, die als Reaktion auf eine Dauer des Steuersignals bereitgestellt werden, nach der Formel $(x_1 + x_4) - (x_2 + x_5)$.

12. Kreisel, **dadurch gekennzeichnet, dass** er der Messvorrichtung nach einem der Ansprüche 1 bis 11 entspricht, wobei die Messgröße die Rotationsgeschwindigkeit des Interferometers (1) ist.

13. Messverfahren für eine Größe, deren Änderung einen Phasenunterschied zwischen zwei Wellen erzeugt, wobei

- sich in einem Sognac-Ringinterferometer (1), vorzugsweise Monomode, zwei gegenläufige Wellen ausbreiten können, die von einer Lichtquelle (3) mit breitem Spektrum und der Leuchtkraft P emittiert werden, wobei die Laufzeit der Wellen zwischen ihrer Aufteilung und ihrer Überlagerung $\tau$ beträgt,
- der Lichtstrom aus dem Interferometer (1) delektiert und in ein elektrisches Signal umgewandelt wird, das den Gesamtphasenunterschied $\delta\varphi_t$ zwischen den gegenläufigen Wellen darstellt,
- ein Phasenunterschied $\delta\varphi_m = \delta\varphi_b + \delta\varphi_{cr}$ zwischen den gegenläufigen Wellen erzeugt wird, wobei der Phasenunterschied $\delta\varphi_m$ eine Abweichkomponente $\delta\varphi_m$ und eine Gegenkopplungskomponente $\delta\varphi_{cr}$ aufweiset
- das elektrische Signal aus dem Detektor (13) an die elektronischen Mittel (19) übertragen wird und mit den elektronischen Mitteln (19) ein erstes Signal $S_1$ in Abhängigkeit von der Messgröße ermittelt wird,
- das erste Signal in Abhängigkeit von der Messgröße ein erstes Steuersignal $V_{cr}$ des optischen Phasenmodulators (15) erzeugt, das derart ermittelt wird, dass der Phasenunterschied $\delta\varphi_{cr}$, den er zwischen den gegenläufigen Wellen erzeugt, den Phasenunterschied $\delta\varphi_p$ kompensiert, der durch die Messgröße bewirkt wurde,
- mit den elektronischen Mitteln (19) ein zweites Signal $S_2$ in Abhängigkeit von der Leuchtkraft P der Lichtquelle (3) anhand des elektrischen Signals aus dem Detektor (13) ermittelt wird,

**dadurch gekennzeichnet, dass** der optische Phasenmodulator (15) eine Störkomponente $\delta\varphi_{cp}$ erzeugt, die zum Phasenunterschied $\delta\varphi_m = \delta\varphi_b + \delta\varphi_{cr}$ hinzukommt.

**ART ANTÉRIEUR**

**FIGURE 1**

**ART ANTERIEUR**

**FIGURE 2**

**ART ANTERIEUR**

**FIGURE 4**

FIGURE 3

FIGURE 5

$P_0$

$\delta\varphi_{b4}(t)$    $\delta\varphi_{b3}(t)$    $\delta\varphi_{b1}(t)$    $\delta\varphi_{b2}(t)$

FIGURE 6

$P_0$

$\delta\varphi_{b6}(t)$    $\delta\varphi_{b5}(t)$    $\delta\varphi_{b4}(t)$    $\delta\varphi_{b1}(t)$    $\delta\varphi_{b2}(t)$    $\delta\varphi_{b3}(t)$

FIGURE 7

23

FIGURE 8

**EP 2 005 113 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0206970 A
- US 4299490 A
- FR 2654827 A

**Littérature non-brevet citée dans la description**

- Fiber Optic Gyroscope. **Hervé C. LEFEVRE.** Optical Fiber Sensors. ARTECH HOUSE, 1989, vol. 2
- Principe du gyrofibre, le gyromètre, des applications à haute dynamique. *Revue Scientifique de la Défense,* 1990